# EUROPEAN PATENT SPECIFICATION

(11) **EP 2 625 228 B1**
(45) Date of publication and mention of the grant of the patent: **22.10.2014**
(21) Application number: 11715734.7
(22) Date of filing: 16.02.2011
(51) Int. Cl.: C08K 5/29, C08K 3/36, C08K 3/24, C08G 59/50, C08G 59/40, C09D 5/08, C09D 5/00, C09D 163/00, C09D 167/00

(54) **UNDERCOAT PAINT COMPOSITION EXCELLENT IN TERMS OF CORROSION RESISTANCE**
ZUSAMMENSETZUNG VON GRUNDIERLACK MIT AUSGEZEICHNETER KORROSIONSBESTÄNDIGKEIT
COMPOSITION DE PEINTURE DE SOUS-COUCHE EXCELLENTE EN TERMES DE RÉSISTANCE À LA CORROSION

(30) Priority: 30.06.2010 JP 2010150503
(43) Date of publication of application: 14.08.2013
(73) Proprietor: BASF Japan Ltd., Minato-ku Tokyo 106-6121 (JP)
(72) Inventor: TSUJITA, Takahiro, Kanagawa 252-0804 (JP); YAMAMOTO, Toshio, Yokohama 234-0051 (JP)
(74) Representative: Fischer, Jens-Dieter W.E.
(86) International application number: PCT/IB2011/000304
(87) International publication number: WO 2012/001468

(56) References cited:
- JP-A- 2008 291 162
- US-A- 6 126 730
- US-A1- 2007 122 645
- US-A1- 2009 104 364

## Description

### [Technical Field]

The present invention concerns chromium-free undercoat paint compositions which are excellent in terms of corrosion resistance, and more precisely the invention concerns undercoat paint compositions which are useful for improving the corrosion resistance of coated metal sheets which have zinc plated steel sheet and aluminum/zinc alloy plated steel sheet and the like as the base material.

Coated metal sheets which have been coated using a paint of this invention are ideal for various types of domestic electrical appliances such as refrigerators, washing machines, heating units and external air conditioning units and in building applications such as the roofs, walls, shutters and the like of buildings.

### [Technical Background]

Pre-coated painted metal sheets where paint has been applied to a zinc-based plated steel sheet are subjected to cutting and forming operations after painting, and so there are often edges and cracks and scratches in the worked parts where the metal is exposed locally. A lowering of corrosion resistance is liable to arise in these parts, and so generally a chromium-based anti-rust pigment is included in the undercoat paint film in addition to carrying out a chemical forming treatment which includes a chromate on the base steel sheet in order to ensure good corrosion resistance and adhesion properties.

However today a problem has arisen with such coated metal sheets in that concern has been expressed in respect of environmental protection due to the leaching out of highly toxic chromium and there is a great demand for chromium-free undercoat paints in which no chromium-based anti-rust pigment is used.

Chromium-free coated metal sheets with molten-zinc plated steel sheets as the base material have been developed in the past and the addition of silica and phosphates to the paint film as anti-rust pigments instead of chromium-based anti-rust pigments has been proposed (for example, see Patent Citation 1). However, when compared with the conventional paints for pre-coated metal sheets which contain hexavalent chromium, the long term corrosion resistance, and especially the long term corrosion resistance in corrosion environments with a high wetting rate such as in a salt water spray test, is poor and, moreover, adequate corrosion resistance is not obtained when the abovementioned technique is applied to coated metal sheets where 55% Al/Zn based-melt plated steel sheet is used for the base material.

Furthermore, paint compositions in which at least one type of anti-rust pigment selected from among the group comprising the carbonate of Ca or Mg, the sulfate of Al or Ba, the acetate of Al, Zn, Ni, W or Cs (cesium), the phosphate of Al, Mg or Ca, the molybdate of Al or Zn, the phosphomolybdate of Al, Zn or Pb, the vanadate of Al, Zn, Pb or P, the oxide of Al, Zn, Ni, W, V (vanadium), Si, Mg, Ca, Zr or Ti and zinc phosphite is used as a chromium-free anti-rust pigment and a metal powder is used as an electrically conductive material are known (for example, see Patent Citation 2).

Furthermore, anti-rust film layers for pre-coating purposes which include anti-rust pigments which release vanadium ions and anti-rust pigments which release phosphate ions are known (for example, see Patent Citation 3).

Furthermore, paint compositions in which fine silica particles and magnesium salts are used are known (for example, see Patent Citation 4).

However, corrosion resistance in the worked parts and at the edges in particular is unsatisfactory with the paint films formed with these paints. Furthermore, the resistance to chemical attack such as the alkali resistance, acid resistance and the like is often poor. Furthermore, when a large amount of anti-rust pigment is used the water resistance is often poor and as yet a situation where the chromium-based anti-rust pigments can be replaced in the production of pre-coated metal sheets has not been reached.

Furthermore, the use of anti-rust pigment mixtures comprising (1) at least one type of molybdic acid compound selected from among sodium molybdate, ammonium molybdate and molybdenum trioxide, (2) metal silicate in which the metal is selected from among calcium, magnesium and zinc and (3) phosphoric acid-based metal salt in which the metal of the metal salt is selected from among calcium, magnesium, zinc and aluminum, and anti-rust pigment mixtures comprising the abovementioned components (1), (2) and (3) along with (4) at least one type of vanadium compound selected from among vanadium pentoxide, calcium vanadate and magnesium vanadate is known (for example, see Patent Citation 5). However, when compared with paints in which chromium-base pigments are used the corrosion resistance and the resistance to chemical attack are poor and the corrosion resistance in the edge parts in particular is unsatisfactory.

### [Prior Art Literature]

### [Patent Citations]

Patent Citation 1:
   Japanese unexamined patent application laid open H9-012931
Patent Citation 2:
   Japanese unexamined patent application laid open H11-61001
Patent Citation 3:
   Japanese unexamined patent application laid open 2000-199078
Patent Citation 4:
   Japanese unexamined patent application laid open 2001-172570
Patent Citation 5:
   Japanese unexamined patent application laid open 2008-291162

### [Outline of the Invention]

### [Problems to be Resolved by the Invention]

The aim of the present invention is to provide a chromium-free undercoat paint composition with which paint films excellent in terms of corrosion resistance at the edges and in scratched parts and worked parts of pre-coated metal sheets can be formed.

### [Means of Resolving These Problems]

As a result of thorough research carried out with a view to resolving the abovementioned problems, the inventors have discovered that the problems can be resolved by combining the specified resins and the specified chromium-free anti-rust pigments of the components indicated below and the invention is based upon this discovery.

That is to say, the present invention provides an undercoat paint composition which is characterized in that it includes (A) bisphenol-type epoxy resin of number average molecular weight from 400 to 10,000 or a modified form of such a resin and/or hydroxyl group containing polyester resin of hydroxyl group value from 5 to 200 mgKOH/g and number average molecular weight from 500 to 20,000, (B) blocked polyisocyanate compound and/or melamine resin and, with respect to the total mass of the resin solid fractions of the (A) and (B) components, (C) from 10 to 45 mass% magnesium vanadate, (D) from 2 to 20 mass% calcium ion-exchanged silica, (E) from 10 to 45 mass% of at least one type of material selected from among the group comprising' zinc phosphate, zinc diphosphate, zinc dihydrogen phosphate and zinc tripolyphosphate, and (F) from 0.1 to 5 mass% of at least one material selected from among the group comprising cerium compounds, tungstic acid compounds (excluding magnesium tungstate) and molybdic acid compounds (excluding magnesium molybdate).

Furthermore, the invention also provides an undercoat paint composition in which, in the abovementioned undercoat paint composition, the aforementioned cerium compound is of at least one type selected from among the group comprising cerium phosphate, cerium oxide and cerium gluconate.

### [Effect of the Invention]

An undercoat paint composition of this invention is a chromium-free undercoat paint composition which is beneficial in terms of environmental safety and, moreover, a coated metal sheet which has been obtained with a paint composition of this invention exhibits an excellent anti-rust effect of the same order in terms of the corrosion resistance of the edge parts and the flat parts and worked parts as that of a coated metal sheet which has been obtained with a paint in which a conventional chromate-based anti-rust pigment has been used.

### [Embodiment of the Invention]

A bisphenol-type epoxy resin of number average molecular weight from 400 to 10,000 can be used for the (A) component resin of this invention. The hydroxyl group value of the bisphenol-type epoxy resin is preferably from 10 to 400 mgKOH/g. In those cases where the hydroxyl group value is below 10 mgKOH/g the crosslink density when the hardened paint film has been formed is too low and so the solvent resistance is low. On the other hand, if the hydroxyl group value exceeds 400 mgKOH/g then the crosslink density when the hardened paint film has been formed is too high and so the workability is reduced. The bisphenol A type epoxy resins synthesized from bisphenol A and epichlorhydrin and the bisphenol F type epoxy resins synthesized from bisphenol F and epichlorhydrin are epoxy resins of this type, but the bisphenol A type resins are preferred from the viewpoint of corrosion resistance.

The preferred number average molecular weight range for the bisphenol A type epoxy resin is from 400 to 10,000. With a number average molecular weight of less than 400 the workability, corrosion resistance and hardening properties decline while if, on the other hand, the number average molecular weight exceeds 10,000 then the viscosity becomes high, and so the coating operability with a roll coater or the like is poor, and this is undesirable.

The bisphenol A type epoxy resins have secondary hydroxyl groups in side chains and when an epoxy resin is used in this invention the hydroxyl group value of the resin is preferably from 120 to 300 mgKOH/g. The epoxy equivalent is preferably from 150 to 6,000, and more desirably from 200 to 5,000.

Commercial bisphenol A type epoxy resins include jER 834, 1001, 1002, 1003, 1004, 1007 and 1009 (trade names, produced by the Mitsubishi Kagaku Co.), Epotote YD-134, YD-001, YD-011, YD-012, YD-013, YD-014, YD-017 and YD-019 (trade names, produced by the Toto Kasei Co.) and the like.

Furthermore, all or some of the functional groups of the bisphenol epoxy resins which can be used in the invention may be modified. The modification of an epoxy resin involves reacting other organic groups with the epoxy groups or hydroxyl groups of the bisphenol-type epoxy resin and, for example, they may be modified with polyester, alkanolamine, caprolactone, isocyanate compounds, acid anhydrides or the like, but they can be used without limitation to these various types of modified form. Epicron (trade name, produced by the DIC Co.) can be cited as such a commercial modified epoxy resin and Epoxy 834 (trade name, produced by the Mitsui Kagaku Co.) can be cited as a urethane modified epoxy resin.

The number average molecular weight of a modified bisphenol-type epoxy resin is preferably within the same range as the number average molecular weight of the bisphenol-type epoxy resins. The hydroxyl group values of the modified bisphenol-type epoxy resins are preferably within the same range as the hydroxyl group values of the bisphenol-type epoxy resins.

A hydroxyl group containing polyester resin of hydroxyl group value from 5 to 200 mgKOH/g and number average molecular weight from 500 to 20,000 may be used for the (A) component resin of this invention.

The hydroxyl group value of the hydroxyl group containing polyester resin is preferably from 10 to 150 mgKOH/g. With a hydroxyl group value below 5 mgKOH/g the crosslink density when the hardened paint film has been formed is too low and so the solvent resistance is low. On the other hand if the hydroxyl group value exceeds 200 mgKOH/g then the crosslink density when the hardened paint film has been formed is too high and so the workability is reduced.

The number average molecular weight of the aforementioned hydroxyl group containing polyester resin is preferably from 800 to 18,000. If the number average molecular weight of the aforementioned hydroxyl group containing resin is less than 500 then the crosslink density when the hardened paint film has been formed is too high and so the workability is reduced, and if the number average molecular weight exceeds 20,000 then the crosslink density of the hardened paint film is too low and so the solvent resistance is reduced.

Moreover, the number average molecular weight used in this invention is the molecular weight calculated as polystyrene obtained by means of GPC.

The hydroxyl group containing polyester resins can be obtained using polybasic acids and polyhydric alcohols as the raw materials using known production methods such as the direct esterification method, the ester-exchange method, the ring-opening polymerization method and such like methods. Hydroxyl Group Containing Polyester Resins

As well as the polybasic acids generally used in the production of polyesters including, for example, aromatic carboxylic acids such as phthalic acid anhydride, isophthalic acid, tetrahydrophthalic acid anhydride, hexahydrophthalic acid anhydride, trimellitic acid anhydride and the like and aliphatic carboxylic acids such as adipic acid, sebacic acid and the like, fatty acids which have from 8 to 18 carbon atoms, dimer acid and the like can be used as the polybasic acids which are raw materials for the production of hydroxyl group containing polyester resins. The inclusion of from 30 to 55 mass% of aromatic carboxylic acid as the polybasic acid with respect to the total mass of all the polybasic acid and polyhydric alcohol is desirable from the viewpoint of the balance of paint film hardness and workability and from the viewpoint of corrosion resistance. One type, or a combination of two or more types, of polybasic acid can be used.

Dihydric alcohols such as ethylene glycol, propylene glycol, diethylene glycol, dipropylene glycol, polyethylene glycol, polypropylene glycol, neopentyl glycol, hexylene glycol, 1,4-butanediol, 1,5-pentandiol, 1,6-hexanediol, 2-butyl-2-ethyl-1,3-propanediol, 3,3-diethyl-1,5-pentanediol, methylpentanediol and the like and alcohols with three or more hydroxyl groups such as glycerine, trimethylolethane, trimethylolpropane, pentaerythritol and the like can be used as the polyhydric alcohols which are production raw materials for hydroxyl group containing polyester resins. Furthermore, the inclusion of from 20 to 50 mass% of methylpendanediol as polyhydric alcohol with respect to the total mass of all the polybasic acid and all of the polyhydric alcohol is preferred from the viewpoints of preventing crystallization of the polyester resin and workability. One type, or a combination of two or more types, of polyhydric alcohol can be used.

The (B) component of this invention is a hardening agent which reacts with the hydroxyl groups of the (A) component resin and a blocked polyisocyanate compound and/or melamine resin can be used.

Examples of blocked polyisocyanate compounds which can be used in this invention include those which have been produced by blocking with a blocking agent some or all of the isocyanate groups of polyisocyanate compounds such as, for example, hexamethylene diisocyanate, isophorone diisocyanate, tolylene diisocyanate, diphenylmethane diisocyanate, xylylene diisocyanate, dicyclohexylmethane-4,4'-diisocyanate and polyisocyanate derivatives such as biuret forms, isocyanurate forms and trimethylolpropane adduct forms.

Examples of the blocking agent include ketoxime-based blocking agents such as ε-caprolactam, methyl ethyl ketoxime, methyl isoamyl ketoxime, methyl isobutyl ketoxime and the like, phenol-based blocking agents such as phenol, cresol, catechol, nitrophenol and the like, alcohol-based blocking agents such as isopropanol, trimethylolpropane and the like, active methylene-based blocking agents such as malonic acid esters, acetoacetic acid esters and the like, and pyrazole and the like as heterocyclic compounds. One or a combination of two or more of these blocked polyisocyanate compounds may be used.

Furthermore, the butylated melamine resins or methylated melamine resins which are compatible with the aforementioned epoxy resins and/or hydroxyl group containing polyester resins are ideal as melamine resins which can be used in this invention.

The proportions in which the (A) component base resin and the (B) component hardening agent are included as the ratio by mass of the resin solid fractions are preferably from 95/5 to 50/50, and more desirably from 90/10 to 60/40. If the (A) component content exceeds 95 mass% then there is insufficient crosslinking and the resistance to chemical attack of the paint film falls. Furthermore, if the (A) component content is less than 50 mass% then there is more hardening agent and the workability and adhesion of the paint film decline.

Next the anti-rust pigments which are used in the invention will be described.

The (C) component in this invention is magnesium vanadate.

In this invention the (C) component content is from 10 to 45 mass%, and preferably from 12 to 45 mass%, with respect to the total mass of the resin solid fractions of the (A) component resin and the (B) component hardening agent.

In those cases where the (C) component content is less than 10 mass% the corrosion resistance is reduced and in those cases where it exceeds 45 mass% the moisture resistance is reduced.

The (D) component in this invention is calcium ion-exchanged silica.

In this invention the (D) component content is from 2 to 20 mass%, and preferably from 3 to 18 mass%, with respect to the total amount of the resin solid fractions of the (A) component resin and the (B) component hardening agent.

In those cases where the (D) component content is less than 2 mass% the corrosion resistance is reduced and in those cases where it exceeds 20 mass% the moisture resistance is reduced.

Calcium ion-exchange silica is fine silica particles where calcium ions have been introduced into a fine porous silica support by means of ion exchange. Commercial calcium ion-exchanged silica products include SHIELDEX C303, SHIELDEX AC-3 and SHIELDEX C-5 (trade names, all produced by W.R. Grace & Co.).

The calcium ions which are released from the calcium ion-exchanged silica have an electrochemical action and various salt-forming actions and work effectively to improve corrosion resistance. Furthermore, the silica which has been fixed in a paint film works effectively to suppress peeling of the paint film in corrosive atmospheres.

The (E) component in this invention is a zinc phosphate-based anti-rust pigment.

Zinc phosphate, zing diphosphate, zinc dihydrogen phosphate, zinc tripolyphosphate and the like can be cited as zinc phosphate-based anti-rust pigments, and one of these or two or more types can be used.

In this invention the (E) component content is from 10 to 45 mass%, and preferably from 12 to 40 mass%, with respect to the total amount of the resin solid fractions of the (A) component resin and the (B) component hardening agent.

In those cases where the (E) component content is less than 10 mass% the corrosion resistance is reduced and in those cases where it exceeds 45 mass% the adhesion after a boiling water test is reduced.

Phosphates are non-toxic anti-rust pigments and it is thought that the metal ions of the metal surface react with the phosphate ions which gradually leach out in the water which has been entered from the outside, an immobile film which has good adhesion properties is formed, the metal surface is protected and an anti-rust action appears.

Examples of commercial zinc phosphate-based anti-rust pigments include LF Bosei D-1 and ZP-50S (trade names, produced by Kikuchi Color) and examples of zinc phosphite-based anti-rust pigments include EXPERT NP-1500 and NP-1600 (trade names, produced by Toa Pigments).

The (F) component in this invention is at least one type selected from among the group comprising cerium compounds, tungstic acid compounds and molybdic acid compounds (excluding magnesium molybdate). In this invention the (F) component content is from 0.1 to 5 mass%, and preferably from 0.3 to 4 mass%, with respect to the total amount of the resin solid fractions of the (A) component resin and the (B) component hardening agent.

In those cases where the (F) component content is less than 0.1 mass% the corrosion resistance is reduced and in those cases where it exceeds 5 mass% there is an economic disadvantage.

Cerium phosphate, cerium oxide, cerium gluconate and the like can be cited as cerium compounds which can be used in this invention.

Furthermore, sodium tungstate and the like can be cited as tungstic acid compounds which can be used in the invention.

Furthermore, the molybdates of one or more metals selected" from among the group comprising zinc, calcium and aluminum can be cited as molybdic acid compounds which can be used in this invention.

However, since magnesium ions are obtained from the magnesium vanadate, magnesium tungstate and magnesium molybdate should not be used.

Molybdic acid metal salts are non-toxic pigments and it is thought that the metal ions of the metal surface react with molybdic acid ions which are slowly leached out in the water which has invaded from the outside, an immobile film which has good adhesion is formed, the surface is protected and an anti-rust action appears.

Zinc molybdate-based LF Bosei M-PSN (trade name, produced by Kikuchi Color), calcium molybdate-based LF Bosei MC-400WR (trade name, produced by Kikuchi Color) and aluminum molybdate based LF Bosei PM-300 and PM-308 (trade names, produced by Kikuchi Color) and the like can be cited as commercial molybdic acid-based anti-rust pigments.

The corrosion resistance can be improved synergistically by compounding these (C), (D), (E) and (F) component anti-rust pigments as a mixture of the prescribed proportions in an undercoat paint composition of this invention.

Hardening catalysts can be compounded as required in order to improve the hardening properties of an undercoat paint composition of this invention.

Organometallic catalysts and the like such as, for example, tin octanoate, dibutyltin di(2-ethylhexanoate), dioctyltin di(2-ethylhexanoate), dioctyltin diacetate, dibutyltin dilaurate, dibutyltin oxide, dioctyltin oxide, lead 2-ethylhexanoate and the like can be cited as ideal hardening catalysts for the blocked polyisocyanate compounds. Furthermore, phosphoric acid-based catalysts or sulfonic acid compounds or amine neutralizates of sulfonic acid compounds can be used as ideal hardening catalysts for melamine/formaldehyde resins. p-Toluenesulfonic acid, dodecylbenzenesulfonic acid, dinonylnaphthalenesulfonic acid, dinonylnaphthalenedisulfonic acid and the like can be cited as typical examples of the sulfonic acid compounds. Primary amines, secondary amines and tertiary amines can all be used for the amines in the neutralized forms of the sulfonic acid compounds. From among these the amine neutralizates of p-toluene-sulfonic acid and/or amine neutralizates of dodecyl-bezenesulfonic acid are ideal from the viewpoints of the stability of the paint, the reaction accelerating effect and the properties of the paint film obtained. One type, or a combination of two or more types, of hardening catalyst can be used.

In addition, additives such as the pigments, organic solvents, anti-settling agents, dispersing agents, antifoaming agents; surface controlling agents, ultraviolet absorbers, ultraviolet stabilizers and the like which are generally used in the paint field can be used, as required, in an undercoat paint composition of this invention.

Examples of said pigments include the true pigments calcium carbonate, kaolin, clay, talc, silica, bentonite, titanium oxide, barium sulfate and alumina as well as, for example, titanium white, titanium yellow, red iron oxide, carbon black, cyanine blue, cyanine green, azo-based and quinacridone based pigments and the like, and from among these titanium white can be used ideally.

No particular limitation is imposed upon the organic solvents which can be used in an undercoat paint composition of this invention and, for example, one type, or a combination of two or more types, of organic solvent selected from among cyclohexanone, Solvesso 100 (trade name, produced by the Exxon Mobil Co.), butanol, toluene, xylene, ethyl acetate, butyl acetate, ethylene glycol mono-ethyl ether acetate, diethylene glycol mono-ethyl ether acetate, 2-methoxy-propyl acetate, ethylethoxypropionate, methyl isobutyl ketone and the like can be used.

A sand grinding mill, disperser or the like as generally used in the paint field can be used as the method of dispersing the anti-rust pigments etc. of the undercoat paint composition of this invention.

The undercoat paint compositions of this invention are useful for painting on base materials for pre-coated steel sheets such as molten zinc plated steel sheets or electro-zinc plated steel sheets, aluminum/zinc alloy plated steel sheets, stainless steel sheets, aluminum sheets and the like which may have been subjected to a phosphate based, chromate-based or similar chemical forming treatment.

No particular limitation is imposed upon the method of painting with an undercoat paint composition of this invention and, for example, painting with a high speed roll coater as generally used with heat-hardening in a hot draught drier can be used. The film thickness of the undercoat paint film is from 1 to 10 µm, and the preferred hardening conditions are maximum temperature reached by the sheet during heating and hardening from 150 to 300°C and firing time from 15 to 150 seconds.

Generally a top-coat paint is coated over the paint film obtained by applying an undercoat paint composition of this invention in order to provide a good appearance and to heighten the various properties required of a pre-coated steel sheet such as weather resistance, workability, resistance to chemical attack, staining resistance, water resistance, corrosion resistance and the like.

Polyester resin-based paints, silicon polyester resin-based paints, polyurethane resin-based paints, acrylic resin-based paints, fluorinated resin-based paints and the like can be selected and used appropriately as top-coat paints. The known methods generally used in the past can be used as methods of chemical forming treatment, top-coat painting and the like.

The film thickness of the top-coat paint is from 10 to 25 µm and the preferred hardening conditions are maximum temperature reached by the sheet during heating and hardening from 190 to 250°C and firing time from 20 to 180 seconds. Moreover, a mid-coat paint may be applied between the undercoat painting and the top-coat painting in accordance with the performance requirements of the paint film and in this case a three-coat three-bake system is preferred.

Polyester resin-based paints, silicon polyester resin-based paints, polyurethane resin-based paints, acrylic resin-based paints, fluorinated resin-based paints and the like can be selected and used appropriately for the mid-coat paint. The known methods generally used in the past can be used as methods of chemical forming treatment, mid-coat painting and the like. The film thickness of the mid-coat paint is from 10 to 25 µm and the preferred hardening conditions are maximum temperature reached by the sheet during heating and curing from 190 to 250°C and firing time from 20 to 180 seconds.

Furthermore, a paint film may be established on both sides of the object which is being painted and by forming a paint film on both sides it is possible to obtain with the paint compositions of this invention coated metal sheets which do not contain chromium-based anti-rust pigments and which are good in terms of the health of the environment and which also have excellent corrosion resistance.

### [Illustrative Examples]

The invention is described in more practical terms below by means of a production example and illustrative examples, but the invention is not limited by the illustrative examples shown below. Moreover, "parts" signifies parts by weight and "%" signifies mass%.

### <Production Example 1 Production of Polyester Resin A>

Isophthalic acid (320 parts), 46 parts of adipic acid, 71.8 parts of trimethylolpropane, 36.6 parts of 1,6-hexanediol and 159 parts of methylpentanediol were introduced into a flask which had been furnished with a stirrer, a refining distillation column, a water-separating device, a condenser and a thermometer and heated and stirred and the temperature was raised from 160°C to 230°C at a constant rate over a period of 4 hours while distilling the water of condensation which was being produced out of the system. When the temperature had reached 230°C, 20 parts of xylene were added slowly and the condensation reaction was continued while maintaining the same temperature. The reaction was stopped when the acid value fell below 5 mgKOH/g and, after cooling to 100°C, 243 parts of a high boiling point aromatic hydrocarbon solvent (trade name Solvesso 100, produced by the Exxon Mobil Co.) and 104 parts of butyl cellosolve were added and a solution of the polyester resin A was obtained. The resin solid fraction was 60 mass%, the resin acid value was 3.5 mgKOH/g, the number average molecular weight of the resin was 2,300 and the hydroxyl group value was 120 mgKOH/g.

### Example 1 (Production of an Undercoat Paint Composition)

Using a flask which had been furnished with a stirrer, a condenser and a thermometer, 80 parts of bisphenol A type epoxy resin (trade name jER 1009, produced by the Mitsubishi Kagaku Co., number average molecular weight 3,800) was heated and dissolved in a Solvesso 100 (trade name, high boiling point aromatic hydrocarbon-based solvent produced by the Exxon Mobil Co.)/cyclohexanone/n-butanol = 55/27/18 solvent mixture A (120 parts). Next 150 parts of the mixed solvent A, 20 parts of magnesium vanadate, 5 parts of SHIELDEX C303 (trade name, calcium ion-exchanged silica produced by W.R. Grace & Co.), 20 parts of zinc phosphate, 3 parts of cerium oxide, 25 parts of titanium oxide, 5 parts of kaolin and 3 parts of barium sulfate were mixed with the epoxy resin solution which had been taken out of the container after cooling and dispersed in a sand grinding mill until the particle size reached from 20 to 25 µm and a mill-paste was produced.

Next the polyester resin A (resin solid fraction 60 mass%) (13.3 parts), 7.5 parts of Yuban 122 (n-butylated melamine resin, resin solid fraction 60%, produced by the Mitsui Kagaku Co.) and 10 parts of Desmodur BL-3175 (methyl ethyl ketoxime blocked HDI isocyanurate-type polyisocyanate compound solution, produced by the Sumika Bayer Co., resin solid fraction 75%) were added to the mill-paste with stirring until the mixture was uniform and then the viscosity was adjusted with the abovementioned solvent mixture A in such a way that the paint viscosity was 80 seconds with a Ford cup #4 (25°C) and an undercoat paint composition was obtained.

### Examples 2 to 17 and Comparative Examples 1 to 7

Each undercoat paint composition was obtained in the same way as in Example 1 except that the epoxy resin or hydroxyl group-containing polyester resin, hardening agent, anti-rust pigments and other pigments as used in Example 1 were as shown in Tables 1 to 3. However, the resin in Tables 1 to 3 is shown as the resin solid fraction.

**Table 1**

| Component | Raw Material | Example | | | | | | | | |
|---|---|---|---|---|---|---|---|---|---|---|
| | | 1 | 2 | 3 | 4 | 5 | 6 | 7 | 8 | 9 |
| | jER 1009^{(Note 1)} | 80 | 80 | 80 | 80 | 80 | 80 | 80 | 80 | 80 |
| (A) | Epicron H-304-40 ^{(Note 2)} | | | | | | | | | |
| | Polyester Resin A | 8 | 8 | 8 | 8 | 8 | 8 | 8 | 8 | 8 |
| | Vylon GK-590 ^{(Note 3)} | | | | | | | | | |
| (B) | Desmodur BL-3175 ^{(Note 4)} | 7.5 | 7.5 | 7.5 | 7.5 | 7.5 | 7.5 | 7.5 | 7.5 | 7.5 |
| | Yuban 122 ^{(Note 5)} | 4.5 | 4.5 | 4.5 | 4.5 | 4.5 | 4.5 | 4.5 | 4.5 | 4.5 |
| (C) | Magnesium Vanadate | 20 | 12 | 43 | 20 | 20 | 20 | 20 | 20 | 20 |
| (D) | SHIELDEX C303 ^{(Note 6)} | 10 | 5 | 5 | 3 | 18 | 10 | 10 | 10 | 10 |
| | Zinc Phosphate | 20 | 20 | 20 | 20 | 20 | | | | |
| (E) | Zinc Diphosphate | | | | | | 12 | 20 | 40 | |
| | Zinc Dihydrogen Phosphate | | | | | | | | | 20 |
| | Zinc Tripolyphospate | | | | | | | | | |
| | Sodium Tungstate | | | | | | | | | |
| | Calcium Molybdate | | | | | | | | | |
| | Molybdenum Trioxide | | | | | | | | | |
| (F) | Cerium Oxide | 3 | 2 | 2 | 2 | 2 | 2 | 4 | 2 | 2 |
| | Magnesium Diphosphate | | | | | | | | | |
| | Vanadium Pentoxide | | | | | | | | | |
| | Aluminum Tripolyphosphate | | | | | | | | | |
| | Calcium Metasilicate | | | | | | | | | |
| | Silisia 740 ^{(Note 7)} | | | | | | | | | |
| | Titanium Dioxide | 25 | 25 | 25 | 25 | 25 | 25 | 25 | 25 | 25 |
| Others | Kaolin | 5 | 5 | 5 | 5 | 5 | 5 | 5 | 5 | 5 |
| | Barium Sulfate | 3 | 3 | 3 | 3 | 3 | 3 | 3 | 3 | 3 |

**Table 2**

| Component | Raw Material | Example | | | | | | | |
|---|---|---|---|---|---|---|---|---|---|
| | | 10 | 11 | 12 | 13 | 14 | 15 | 16 | 17 |
| | jER 1009 ^{(Note 1)} | 80 | 80 | 80 | 80 | 80 | | | |
| (A) | Epicron H-304-40 ^{(Note 2)} | | | | | | 80 | | |
| | Polyester Resin A | 8 | 8 | 8 | 8 | 8 | 8 | 88 | |
| | Vylon GK-590 ^{(Note 3)} | | | | | | | | 88 |
| (B) | Desmodur BL-3175 ^{(Note 4)} | 7.5 | 7.5 | 7.5 | 7.5 | 7.5 | 7.5 | 7.5 | 7.5 |
| | Yuban 122 ^{(Note 5)} | 4.5 | 4.5 | 4.5 | 4.5 | 4.5 | 4.5 | 4.5 | 4.5 |
| (C) | Magnesium Vanadate | 20 | 20 | 20 | 20 | 20 | 20 | 20 | 20 |
| (D) | SHIELDEX C303 ^{(Note 6)} | 10 | 10 | 5 | 10 | 10 | 10 | 10 | 10 |
| | Zinc Phosphate | | 20 | 20 | 20 | 20 | 20 | 20 | 20 |
| (E) | Zinc Diphosphate | | | | | | | | |
| | Zinc Dihydrogen Phosphate | | | | | | | | |
| | Zinc Tripolyphospate | 20 | | | | | | | |
| | Sodium Tungstate | | | | 2 | | | | |
| | Calcium Molybdate | | | | | 2 | | | |
| | Molybdenum Trioxide | | | | | | | | |
| (F) | Cerium Oxide | 2 | 0.3 | 2 | | | 2 | 2 | 2 |
| | Magnesium Diphosphate | | | | | | | | |
| | Vanadium Pentoxide | | | | | | | | |
| | Aluminum Tripolyphosphate | | | | | | | | |
| | Calcium Metasilicate | | | | | | | | |
| | Silisia 740 ^{(Note 7)} | | | | | | | | |
| | Titanium Dioxide | 25 | 25 | 25 | 25 | 25 | 25 | 25 | 25 |
| Others | Kaolin | 5 | 5 | 5 | 5 | 5 | 5 | 5 | 5 |
| | Barium Sulfate | 3 | 3 | 3 | 3 | 3 | 3 | 3 | 3 |

**Table 3**

| Component | Raw Material | Comparative Example | | | | | | | | | | |
|---|---|---|---|---|---|---|---|---|---|---|---|---|
| | | 1 | 2 | 3 | 4 | 5 | 6 | 7 | 8 | 9 | 10 | 11 |
| | jER 1009 ^{(Note 1)} | 80 | 80 | 80 | 80 | 80 | 80 | 80 | 80 | 80 | 80 | 80 |
| (A) | Epicron H-304-40 ^{(Note 2)} | | | | | | | | | | | |
| | Polyester Resin A | 8 | 8 | 8 | 8 | 8 | 8 | 8 | 8 | 8 | 8 | 8 |
| | Vylon GK-590 ^{(Note 3)} | | | | | | | | | | | |
| (B) | Desmodur BL-3175 ^{(Note 4)} | 7.5 | 7.5 | 7.5 | 7.5 | 7.5 | 7.5 | 7.5 | 7.5 | 7.5 | 7.5 | 7.5 |
| | Yuban 122 ^{(Note 5)} | 4.5 | 4.5 | 4.5 | 4.5 | 4.5 | 4.5 | 4.5 | 4.5 | 4.5 | 4.5 | 4.5 |
| (C) | Magnesium Vanadate | 8 | 50 | 20 | 20 | 20 | 20 | 20 | | 30 | 10 | 10 |
| (D) | SHIELDEX C303 ^{(Note 6)} | 10 | 10 | 1 | 22 | 20 | 10 | 10 | | | | 10 |
| | Zinc Phosphate | 20 | 20 | 20 | 20 | 8 | 50 | 20 | | | | 20 |
| (E) | Zinc Diphosphate | | | | | | | | | | | |
| | Zinc Dihydrogen Phosphate | | | | | | | | | | | |
| | Zinc Tripolyphosphate | | | | | | | | | | | |
| | Sodium Tungstate | | | | | | | | | | | |
| | Calcium Molybdate | | | | | | | | | | | |
| | Molybdenum Trioxide | | | | | | | | | | 20 | 20 |
| (F) | Cerium Oxide | 2 | 2 | 2 | 2 | 2 | 2 | | | | | |
| | Magnesium Diphosphate | | | | | | | | 5 | | | |
| | Vanadium Pentoxide | | | | | | | | 5 | | | |
| | Aluminum Tripolyphosphate | | | | | | | | | | 30 | |
| | Calcium Metasilicate | | | | | | | | | | 20 | 20 |
| | Silisia 740 ^{(Note 7)} | | | | | | | | | 30 | | |
| | Titanium Dioxide | 25 | 25 | 25 | 25 | 25 | 25 | 25 | 25 | 30 | 20 | 20 |
| Others | Kaolin | 5 | 5 | 5 | 5 | 5 | 5 | 5 | | | | |
| | Barium Sulfate | 3 | 3 | 3 | 3 | 3 | 3 | 3 | | | 20 | 20 |

Table Notes: The raw material components in Tables 1 to 3 were as shown below.
Note 1) jER 1009:
   Bisphenol A type epoxy resin produced by the Mitsubishi Kagaku Co., resin solid fraction 100 mass%, epoxy equivalent 2,500 to 3,500, number average molecular weight 3,800, hydroxyl group value from 180 to 220 mgKOH/g
Note 2) Epicron H-304-40:
   Modified epoxy resin produced by the DIC Co., resin solid fraction 40 mass%, number average molecular weight 3,500
Note 3) Vylon GK-590:
   Linear polyester resin produced by the Toyo Boseki Co., resin solid fraction 100 mass%, number average molecular weight 7,000, hydroxyl group value from 15 to 30 mgKOH/g
Note 4) Desmodur BL-3175:
   HDI isocyanurate type polyisocyanate compound blocked with methyl ethyl ketoxime produced by the Sumika Bayer Urethane Co., resin solid fraction 75 mass%, NCO about 11.1 mass%
Note 5) Yuban 122:
   n-Butylated melamine resin produced by the Mitsui Kagaku Co., resin solid fraction 60 mass%
Note 6) SHIELDEX C303:
   Calcium ion-exchanged silica produced by W.R. Grace & Co.
Note 7) Silisia 740:
   Finely powdered silica produced by the Fuji Silica Kagaku Co., pore volume 0.44 ml/g, average particle diameter about 3.5 µm

Moreover, the units of the numerical values of the amounts of each component compounded shown in Tables 1 to 3 are parts.

### Preparation of Coated Sheets for Testing Purposes

Each of the undercoat paint compositions described above was coated with a bar coater in such a way as to provide a dry film thickness of 5 µm on an aluminum/zinc alloy (Al 55%) plated steel sheet of sheet thickness 0.35 mm which had been subjected to a chemical forming treatment and fired in a hot draught drier for 40 seconds at a highest sheet temperature attained of 220°C. A polyester resin-based top-coat paint (Precolor HD0030 Brown, trade name, produced by BASF Coatings Japan Ltd) was coated with a bar coater in such a way as to provide a dry film thickness of 15 µm over the undercoat paint films obtained and fired in a hot draught drier for 50 seconds at a highest sheet temperature attained of 220°C and test pieces were obtained. The paint film performance of the test pieces obtained was evaluated using the methods outlined below. The results are shown in Tables 4 and 5.

### <Paint Film Test Methods>

### (1) Paint Film Adhesion

A pattern of squares (1 mm; 10 x 10 cross cuts) was cut into the paint surface with a cutter knife and this part was pushed out 6 mm from the back with an Eriksen test machine. Subsequently a cellophane tape fixing and stripping test was carried out in the pushed out part and the adhesion of the paint film was evaluated.
○: No abnormality of the paint film at all
Δ: Paint film peeling rate less than 30% (Failure)
X: paint film above 70%

### Boiling Water Resistance

The test sheet was immersed for 2 hours in boiling water and then left for 2 hours to cool to room temperature, any abnormality of the paint film was observed and an assessment was made on the basis of the following criteria in accordance with JIS K 5600-6-2.
○: No abnormality of the paint film at all
Δ: Slight blistering of the paint film
X: Distinct blistering of the paint film

Then a pattern of squares (1 mm; 10 x 10 cross cuts) was cut in the paint surface of the test sheet with a cutter knife, cellophane tape was peeled away and the adhesion of the paint film was evaluated in accordance with JIS K 5600-5-6. The evaluation was based on the classification of test results shown in Table 1 of JIS K 5600-5-6.
○: Class 0
Δ: Class 1
X: Classes 2 to 5

### Alkali Resistance

The cut cross sectional edges of each painted sheet for testing purposes which had been cut to a size of 5 cm x 5 cm were sealed with tape and a cross cut was made through to the base material in the middle of the surface side of the coated steel sheet. The appearance of the paint film on the surface side of the coated sheet after it had been immersed for 48 hours in a 5% sodium hydroxide aqueous solution at 20°C and then taken out and rinsed and dried at room temperature was evaluated.
○: No blister formation at all
Δ: Slight blister formation observed
X: Blister formation observed

### Acid Resistance

The cut cross sectional edges of each painted sheet for testing purposes which had been cut to a size of 5 cm x 5 cm were sealed with tape and a cross cut was made through to the base material in the middle of the surface side of the coated steel sheet. The appearance of the paint film on the surface side of the coated sheet after it had been immersed for 48 hours in a 5% sulfuric acid aqueous solution at 20°C and then taken out and rinsed and dried at room temperature was evaluated.
○: No blister formation at all
Δ: Slight blister formation observed
X: Blister formation observed

### Scratch Resistance

The paint film was scratched with a fixed force using the outer peripheral part of a 10 yen coin (with no milling on the outer peripheral part) and the scratching of the paint film was evaluated on the basis of the following criteria.
○: Adequate scratch resistance with virtually no revelation of the undercoat paint film
Δ: A certain degree of scratch resistance but some of the undercoat paint film peeled away
X: Little scratch resistance, the undercoat paint film peeled away and the base material was exposed

### Folding Workability

A sample sheet was folded over tightly through 180°C, sandwiching a sheet of the same thickness as the sample sheet on the inside (0T signifies folding over without sandwiching a sheet, and 2T signifies folding over sandwiching two sheets). This was carried out at 2T and 3T and, after folding, the apex part was subjected to a peeling test with cellophane tape. The evaluation was carried out using the peeled area of the paint film.
○: No peeling
Δ: from 1 to 30% peeling
X: More than 31% peeling

### Corrosion Resistance

The procedures (i) to (iii) indicated below were carried out with coated test sheets and 100 cycle tests were carried out in accordance with JASO M609-91 using a composite cycle corrosion test (CCT test). One cycle comprised (2 hours spraying with 5% salt water at 35°C) - (4 hours dry at 60°C, humidity 20 to 30%) - (2 hours wet at 50°C, humidity at least 95%).
(i) A cross cut which reached the base material was made in the middle of the surface side of the coated test sheet.
(ii) 4T folding was carried out in the same way as described earlier.
(iii) Cutting was carried out in such a way that the burr on the edge part on both sides of the coated test sheet was directed toward the surface side of the surface side paint film surface (up-burr) or directed toward the reverse side (down-burr).

The state of the 4T folded part, the cross cut part and the edge part of the painted sheet was evaluated after the test.

### (1) The Cross Cut Part

The state of corrosion of the cross cut part was evaluated with the state of white rust development and the mean value of the width of blistering to the left and right of the cut part.
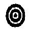 : White rusting and blistering less than 2 mm
○: White rusting and blistering 2 mm or more but less than 5 mm
Δ: White rusting and blistering 5 mm or more but less than 10 mm
X: White rusting and blistering 10 mm or more

### (2) The 4T Worked Part

The rust in the 4T worked part was evaluated on the basis of the following criteria.
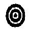 **:** White rusting less than 2 mm
○: White rusting 2 mm or more but less than 10 mm
Δ: White rusting 10 mm or more but less than 30 mm
X: White rusting 30 mm or more

### (3) The Edge Parts

The edge creep width of the up-burr and the down-burr of the painted sheet was evaluated on the basis of the following criteria.
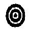 **:** Edge creep width less than 4 mm
○: Edge creep width 4 mm or more but less than 10 mm
Δ: Edge creep width 10 mm or more but less than 20 mm
X: Edge creep width 20 mm or more

**Table 4**

| | | Example | | | | | | | | | | | | | | | | |
|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 17 |
| Paint film adhesion | | ○ | ○ | ○ | ○ | ○ | ○ | ○ | ○ | ○ | ○ | ○ | ○ | ○ | ○ | ○ | ○ | ○ |
| Boiling Water Resistance | Abnormal Paint Film | ○ | ○ | ○ | ○ | ○ | ○ | ○ | ○ | ○ | ○ | ○ | ○ | ○ | ○ | ○ | ○ | ○ |
| | Adhesion | ○ | ○ | ○ | ○ | ○ | ○ | ○ | ○ | ○ | ○ | ○ | ○ | ○ | ○ | ○ | ○ | ○ |
| Alkali Resistance | | ○ | ○ | ○ | ○ | ○ | ○ | ○ | ○ | ○ | ○ | ○ | ○ | ○ | ○ | ○ | ○ | ○ |
| Acid Resistance | | ○ | ○ | ○ | ○ | ○ | ○ | ○ | ○ | ○ | ○ | ○ | ○ | ○ | ○ | ○ | ○ | ○ |
| Scratch Resistance | | ○ | ○ | ○ | ○ | ○ | ○ | ○ | ○ | ○ | ○ | ○ | ○ | ○ | ○ | ○ | ○ | ○ |
| Folding Workability | 2T | ○ | ○ | ○ | ○ | ○ | ○ | ○ | ○ | ○ | ○ | ○ | ○ | ○ | ○ | ○ | ○ | ○ |
| | 3T | ○ | ○ | ○ | ○ | ○ | ○ | ○ | ○ | ○ | ○ | ○ | ○ | ○ | ○ | ○ | ○ | ○ |
| Corrosion Resistance | 4T Worked Part | 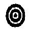 | 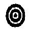 | 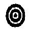 | 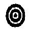 | 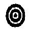 | 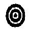 | 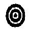 | 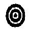 | 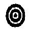 | 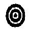 | 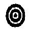 | 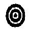 | 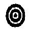 | 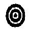 | 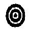 | 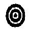 | 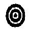 |
| | Cross Cut Part | ○ | ○ | ○ | ○ | 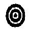 | ○ | ○ | 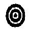 | ○ | ○ | ○ | ○ | ○ | ○ | ○ | ○ | ○ |
| | Edge Part | 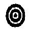 | ○ | 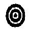 | ○ | ○ | ○ | 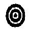 | 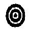 | ○ | ○ | ○ | ○ | ○ | ○ | ○ | ○ | ○ |

**Table 5**

| | | Comparative Example | | | | | | | | | | |
|---|---|---|---|---|---|---|---|---|---|---|---|---|
| | | 1 | 2 | 3 | 4 | 5 | 6 | 7 | 8 | 9 | 10 | 11 |
| Paint film adhesion | | ○ | ○ | ○ | ○ | ○ | ○ | ○ | ○ | ○ | ○ | ○ |
| Boiling Water Resistance | Abnormal Paint Film | ○ | ○ | ○ | Δ | ○ | ○ | ○ | ○ | Δ | ○ | ○ |
| | Adhesion | ○ | Δ | ○ | Δ | ○ | Δ | ○ | ○ | Δ | ○ | ○ |
| Alkali Resistance | | ○ | Δ | ○ | Δ | ○ | Δ | ○ | Δ | Δ | Δ | ○ |
| Acid Resistance | | ○ | Δ | ○ | ○ | ○ | Δ | ○ | ○ | ○ | ○ | ○ |
| Scratch Resistance | | ○ | ○ | ○ | ○ | ○ | ○ | ○ | ○ | ○ | ○ | ○ |
| Folding Workability | 2T | ○ | ○ | ○ | ○ | ○ | ○ | ○ | ○ | ○ | ○ | ○ |
| | 3T | ○ | ○ | ○ | ○ | ○ | ○ | ○ | ○ | ○ | ○ | ○ |
| Corrosion Resistance | 4T Worked Part | ○ | 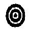 | Δ | 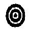 | 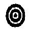 | 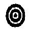 | Δ | Δ | ○ | ○ | ○ |
| | Cross Cut Part | ○ | ○ | Δ | 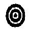 | Δ | ○ | Δ | ○ | ○ | ○ | ○ |
| | Edge Part | X | 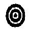 | Δ | ○ | Δ | 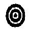 | ○ | Δ | Δ | Δ | Δ |

## Claims

1. An undercoat paint composition, **characterized in that** it includes (A) bisphenol-type epoxy resin of number average molecular weight from 400 to 10,000 or a modified form of such a resin and/or hydroxyl group containing polyester resin of hydroxyl group value from 5 to 200 mgKOH/g and number average molecular weight from 500 to 20,000, (B) blocked polyisocyanate compound and/or melamine resin and, with respect to the total mass of the resin solid fractions of the (A) and (B) components, (C) from 10 to 45 mass% magnesium vanadate, (D) from 2 to 20 mass% calcium ion-exchanged silica, (E) from 10 to 45 mass% of at least one type of material selected from among the group comprising zinc phosphate, zinc diphosphate, zinc dihydrogen phosphate and zinc tripolyphosphate, and (F) from 0.1 to 5 mass% of at least one material selected from among the group comprising cerium compounds, tungstic acid compounds (excluding magnesium tungstate) and molybdic acid compounds (excluding magnesium molybdate).

2. The undercoat paint composition claimed in claim 1 wherein the cerium compound is of at least one type selected from among cerium phosphate, cerium oxide and cerium gluconate.

## Patentansprüche

1. Vorlackzusammensetzung, **dadurch gekennzeichnet, dass** sie (A) Epoxidharz vom Bisphenol-Typ mit einem zahlenmittleren Molekulargewicht von 400 bis 10.000 oder eine modifizierte Form eines derartigen Harzes und/oder hydroxylgruppenhaltiges Polyesterharz mit einer Hydroxylzahl von 5 bis 200 mg KOH/g und einem zahlenmittleren Molekulargewicht von 500 bis 20.000, (B) blockierte Polyisocyanatverbindung und/oder Melaminharz und, bezogen auf die Gesamtmasse der Harzfeststofffraktionen der Komponenten (A) und (B), (C) 10 bis 45 Massen-% Magnesiumvanadat, (D) 2 bis 20 Massen-% mit Calciumionen ausgetauschtes Siliciumdioxid, (E) 10 bis 45 Massen-% mindestens eines Materialtyps aus der Gruppe umfassend Zinkphosphat, Zinkdiphosphat, Zinkdihydrogenphosphat und Zinktripolyphosphat und (F) 0,1 bis 5 Massen-% mindestens eines Materials aus der Gruppe umfassend Cerverbindungen, Wolframsäureverbindungen (ausschließlich Magnesiumwolframat) und Molybdänsäureverbindungen (ausschließlich Magnesiummolybdat) enthält.

2. Vorlackzusammensetzung nach Anspruch 1, wobei es sich bei der Cerverbindung um mindestens einen Typ, der aus Cerphosphat, Ceroxid und Cergluconat ausgewählt ist, handelt.

## Revendications

1. Composition de peinture de sous-couche, **caractérisée en ce qu'**elle comprend (A) une résine époxy de type bisphénol ayant un poids moléculaire moyen en nombre de 400 à 10 000 ou une forme modifiée d'une telle résine et/ou une résine de polyester contenant des groupes hydroxyle ayant un indice hydroxyle de 5 à 200 mg KOH/g et un poids moléculaire moyen en nombre de 500 à 20 000, (B) un composé de polyisocyanate bloqué et/ou une résine de mélamine et, par rapport à la masse totale des fractions solides de résine des composants (A) et (B), (C) de 10 à 45 % en masse de vanadate de magnésium, (D) de 2 à 20 % en masse de silice à ions calcium échangés, (E) de 10 à 45 % en masse d'au moins un type de matériau choisi dans le groupe comprenant le phosphate de zinc, le diphosphate de zinc, le dihydrogénophosphate de zinc et le tripolyphosphate de zinc, et (F) de 0,1 à 5 % en masse d'au moins un matériau choisi dans le groupe comprenant les composés de cérium, les composés d'acide tungstique (à l'exception du tungstate de magnésium) et les composés d'acide molybdique (à l'exception du molybdate de magnésium).

2. Composition de peinture de sous-couche selon la revendication 1, dans laquelle le composé de cérium est d'au moins un type choisi parmi le phosphate de cérium, l'oxyde de cérium et le gluconate de cérium.
